# EUROPÄISCHE PATENTSCHRIFT

(11) **EP 1 288 080 B1**
(45) Veröffentlichungstag und Bekanntmachung des Hinweises auf die Patenterteilung: **24.08.2005**
(21) Anmeldenummer: 02013273.4
(22) Anmeldetag: 18.06.2002
(51) Int. Cl.: B60R 21/16

(54) **Für ein Airbag-Sicherheitssystem bestimmter Gassack**
Airbag specifically adapted for an airbag safety system
Coussin gonflable adapté à un système de sécurité à sac gonflable

(30) Priorität: 24.08.2001 DE 20113999 U
(43) Veröffentlichungstag der Anmeldung: 05.03.2003
(73) Patentinhaber: Automotive Safety Components International GmbH & Co. KG, 31135 Hildesheim (DE); Leewood Elastomer GmbH, 28307 Bremen (DE)
(72) Erfinder: Gadomski, Albert, 28359 Bremen (DE); Mammen, Remmer, 28357 Bremen (DE); Dingfeld, Sandra, 30966 Hemmingen (DE); Schütze, Helge, 31157 Sarstedt (DE)
(74) Vertreter: Sobisch, Peter

(56) Entgegenhaltungen:
- EP-A- 0 835 787
- WO-A-98/01323
- DE-U- 29 804 138
- GB-A- 2 328 649
- US-A- 5 533 753

## Beschreibung

Die Erfindung bezieht sich auf einen Gassack entsprechend den Merkmalen des Oberbegriffs des Anspruchs 1.

Das Hauptanwendungsgebiet derartiger Vorrichtungen besteht bei Airbag-Sicherheitssystemen von Fahrzeugen, wobei ein in den Fahrgastraum hinein expandierfähiger, aufblasbarer Gassack mit einem, beispielsweise über einen Beschleunigungssensor aktivierbaren Gasgenerator in Wirkverbindung steht und somit unter vorgebbaren, einen Unfall indizierenden Bedingungen ein Schutzpolster für wenigstens einen Fahrgast bildet. Der zur vollständigen Entfaltung des Gassackes erforderliche Druckaufbau muß in einer Zeit erfolgen, die auf die unfallbedingt zu erwartende Relativbewegung des Fahrgastes abgestimmt ist, um einen wirksamen Schutz sicherzustellen.

Es ist bekannt, den Gassack zur Vermeidung eines elastischen Rückfederns des in diesen bei einem Unfall eindringenden Fahrgastes ferner dahingehend auszugestalten, dass - wiederum abgestimmt auf die Relativbewegung des Fahrgastes - ein kontrollierter Druckabbau eingestellt wird, nämlich über eine, zum Ausströmen von Gas bestimmte Öffnung des Gassackes, so dass die kinetische Energie des zu schützenden Fahrgastes infolge einer gedrosselten Gasströmung weitgehend absorbiert wird. Erreicht wird somit eine kontrollierte, den Fahrgast vor Verletzungen schützende Abbremsung der genannten Relativbewegung. Ohne diese Maßnahme kann es infolge einer unkontrollierten Rückfederbewegung zu Verletzungen des Fahrgastes an inneren Teilen des Fahrzeugs kommen.

Es ist ferner bekannt, die genannte Öffnung des Gassackes zunächst mit einer Membran oder dergleichen dichtend zu verschließen, so dass mit Beginn einer Aufblasphase eine schnellstmögliche Entfaltung des Gassackes ermöglicht wird. Die Membrane soll in jedem Fall ihre Schließfunktion während dieser Öffnungsphase beibehalten und die Öffnung infolge ihrer Zerstörung erst freigeben, wenn es infolge eines Eindringens des Insassen in den expandierten Gassack zu einer weiteren Druckerhöhung gekommen ist, so dass es anschließend nach Maßgabe des Gasdruckes sowie der Größe der Öffnung zu einem Ausströmen des Gases kommt.

Es sind verschiedene Ausführungsformen an Gassäcken bekannt, bei denen ein kontrollierter Druckabbau nach anfänglichem Druckaufbau und vollständiger Entfaltung des Gassackes erreicht werden soll.

So ist aus der FR 2 766 142 A1 ein Gassack bekannt, der mit einer, anfänglich durch eine Membran verschlossenen, grundsätzlich zum kontrollierten Ausströmen von Gas eingerichteten Öffnung versehen ist. Die aus Silikon bestehende, eine Festigkeitsgrenze unterhalb derjenigen des Werkstoffs des Gassackes aufweisende Membran überdeckt die genannte Öffnung des Gassackes, ist mit diesem verklebt und weist eine konstante Dicke auf. Sie ist mit keinerlei Sollbruchstellen oder vergleichbaren, örtlich wirksamen mechanischen Schwächungsbereichen versehen und derart bemessen, dass sie zwar dem Druck widersteht, der durch den Gasgenerator während des Aufblasens des Gassackes entwickelt wird, nicht jedoch dem zusätzlichen Druck, der dadurch bedingt ist, dass der Fahrgast unfallbedingt in den expandierten Gassack hineingeschleudert wird. In letzerem Fall kommt es somit zu einer Zerstörung der Membran, insbesondere einem Reißen, so dass die genannte Öffnung freigelegt wird und ein Ausströmen von Gas stattfindet.

Aus der US 3 573 885 A ist ein vergleichbarer Gassack bekannt, dessen zum kontrollierten Ausströmen von Gas bestimmte Öffnung anfänglich durch eine Membran, hier durch einen Flicken aus einem relativ unelastischen Material wie z. B. Polytetrafluorethylen (Teflon®) verschlossen ist, welches sich jedenfalls hinsichtlich seiner Dehneigenschaften signifikant von dem Werkstoff des Gassackes unterscheidet. Der die Öffnung dichtend verschließende Flicken wird beidseitig oder auch nur einseitig durch einen Verstärkungsring gestützt und steht mit der Wandung des Gassackes über zwei, sich parallel zu einer Hauptexpansionsrichtung erstreckende Nähte in Verbindung. Unfallbedingt, dass heißt infolge des erhöhten Druckes beim Eindringen des Fahrgastes in den Gassack soll lediglich eine der Nähte reißen, so dass die Öffnung für eine Gasströmung freigegeben wird wohingegen der Flicken über die andere Naht an dem Gassack festgehalten werden soll.

Schließlich ist aus der US 3 527 475 A ein weiterer vergleichbarer Gassack bekannt, bei welchem ein, aus Polyvinylchlorid bestehender Flicken anfänglich eine Öffnung des Gassackes dichtend verschließt. Der in jedem Fall eine geringere Festigkeit als die Wandung des Gassackes aufweisende Flicken ist mit dieser verklebt bzw an dieser anvulkanisiert. Unfallbedingt, nämlich durch den erhöhten Druck beim Eindringen des Fahrgastes in den expandierten Gassack soll es zu einem Zerreißen des Flickens kommen, der zwar die Öffnung freigibt, jedoch teilweise an deren Berandung hängen bleiben soll.

Diese bisher bekannt gewordenen Ausführungsformen weisen jedoch eine Reihe von Unzulänglichkeiten auf.

So kann es infolge der druckabhängigen Zerstörung der Membran bzw des Flickens zu einem unkontrollierten Zerteilen derselben in Einzelteile kommen, die sich mit hoher Geschwindigkeit durch den Fahrgastraum bewegen und ein beträchtliches Verletzungsrisiko mit sich bringen. Dies ist zum Teil auch dadurch bedingt, dass der Einreißvorgang an einem mehr oder weniger zufälligen Punkt seinen Ausgang nimmt und sich unkontrolliert ausbreitet. Dieser Gesichtspunkt ist zwar bei den bekannten Gassäcken entsprechend den Druckschriften US 3 527 475 A und US 3 573 885 A bereits erkannt worden - es wird jedoch kein Lösungsweg aufgezeigt, der in reproduzierbarer Weise auf eine Unterdrückung der Bildung sowie des unkontrollierten Fluges freier Einzelteile der Membran abzielt.

Das Öffnungsverhalten der Membrane wird durch die Fläche der durch sie überdeckten Öffnung, die Art ihrer Anbindung an die Wandung des Gassackes, ihren Werkstoff, ihre Bemessung und insbesondere die gleichförmige Verteilung der beiden letztgenannten Parameter, in der Ebene der Membran gesehen, maßgeblich bestimmt. Insbesondere können bereits von kleinsten Vorschädigungen beträchtliche Änderungen ausgehen, die beispielsweise zu einer frühzeitigen Freigabe der Öffnung führen. Vorschädigungen können beispielsweise während der Entfaltung des Gassackes aufgrund mechanischer oder auch thermischer Einflüsse entstehen und sind nicht hinreichend zuverlässig vermeidbar.

Sowohl die Abmessungen der Membrane als auch deren werkstoffliche Eigenschaften unterliegen unvermeidbaren Streuungen. Diese beeinflussen gleichermaßen das Öffnungsverhalten bei Auftreten eines definierten Druckes innerhalb des Gassackes. Hinzu tritt, dass beispielsweise bei Elastomeren als Werkstoff für derartige Membranen eine Rissbildung bevorzugt entlang deren Polymerketten stattfindet, und damit zufällig ist.

Sowohl die nicht erkennbaren und nicht sicher ausschließbaren Vorschädigungen der Membran als auch deren Inhomogenität hinsichtlich ihrer Abmessungen und werkstofflichen Eigenschaften führen dazu, dass eine Rissbildung bei Auftreten eines hinreichenden Druckes innerhalb des Gassackes an einer mehr oder weniger zufälligen Stelle und gleichermaßen auch bei einem mehr oder weniger zufälligen Wert des Druckes einsetzt. Dies beeinflusst auch die Prozesse der Rissbildung und der Rißausbreitung kann u. a. dazu führen, dass die sich in der Wandung des Gassackes infolge der Zerstörung der Membran ausbildende Öffnung ebenfalls eine zufällige Größe und Gestalt aufweist. Dies bedeutet, dass sowohl der Druckabbau als auch die erzielte Dämpfungswirkung für den Fahrzeuginsassen mit Zufälligkeiten belastet sind. Die Einstellung eines reproduzierbaren Öffnungsverhaltens der Membran ist somit nur eingeschränkt möglich.

Hinzu treten die Befestigungsbedingungen der Membran in den Randbereichen der abgedeckten Öffnung. Unstetigkeiten im Dehnungsverhalten sowie Nähte führen zu örtlichen Spannungserhöhungen, die gleichermaßen der Einstellung eines reproduzierbaren Öffnungsverhaltens entgegenstehen. Ein wirksamer Schutz des Fahrzeuginsassen setzt jedoch voraus, dass eine vorherbestimmte Öffnung zu einem definierten Zeitpunkt für ein Ausströmen des Gases zur Verfügung steht, da nur in diesem Fall die Vorgänge des Druckaufbaus sowie der Entfaltung des Gassackes und dessen anschließender Druckabbau mit Hinblick auf einen optimalen Schutz des Insassen vor Verletzungen wirklich beherrschbar sind.

Aus der Fundstelle WO 98 01323 A1 ist ein weiterer Gassack bekannt, der eine, durch eine Membran verschlossene, zum kontrollierten Ausströmen von Gasen eingerichtete Öffnung aufweist. Die Membran ist durch einen, aus deren Ebene herausklappbaren Abschnitt gekennzeichnet, dessen Berandung aus einem streifenartigen, festigkeitsmäßig geschwächten Linienzug und einem, durch die Verbindungslinie der Endpunkte dieses Linienzugs definierbaren ungeschwächten Linienzug besteht, so dass der Abschnitt um den letztgenannten Linienzug klappbar ist. Der geschwächte Linienzug kann hiernach durch eine Serie von Einschnitten, durch Perforationen oder auch durch eine Kerbe gebildet sein. Die auf diesem Wege hergestellte Membran kann aus einem thermoplastischen Polyolefin bestehen, das mit dem Gewebe des Airbags vernäht, verklebt oder in sonstiger Weise an diesem befestigt ist. Die Bereitstellung eines geschwächten Linienzuges auf diese vorstehend beschriebene Weise bietet jedoch nur äußerst eingeschränkte Möglichkeiten, das Öffnungsverhalten des Gassackes bei gegebener Größe der Öffnung zu beeinflussen.

Es ist vor diesem Hintergrund die Aufgabe der Erfindung, eine gattungsgemäße Vorrichtung hinsichtlich der Festigkeitseigenschaften und eines reproduzierbaren Öffnungsverhalten des Gassackes in Abhängigkeit von einer Druckbeanspruchung weiter zu verbessern, insbesondere einstellbar einzurichten. Gelöst ist diese Aufgabe bei einer solchen Vorrichtung durch die Merkmale des Kennzeichnungsteils des Anspruchs 1.

Es wird stets eine in ihrer Größe, Gestalt und Lage definierte und insbesondere reproduzierbare Öffnung für ein Ausströmen von Gasen aus dem Gassack zur Verfügung gestellt. Diese Öffnung wird im einfachsten Fall durch zwei Linienzüge, nämlich einen festigkeitsmäßig geschwächten und einen ungeschwächten umgrenzt und ist somit konstruktiv vorgegeben. Der festigkeitsmäßig geschwächte Linienzug ist streifenartig angelegt und in seiner Festigkeit dahingehend bemessen, dass der in der Aufblasphase des Gassackes bis zu dessen vollständiger Entfaltung entwickelte Druck beschädigungsfrei aufgenommen werden kann und dass ein Zerreißen erst dann einsetzt, sobald letztgenannter Druck infolge des unfallbedingten Eindringens des Fahrzeuginsassen in den Gassack weiter erhöht wird. Die Festigkeitseigenschaften des letztgenannten Linienzuges hängen sowohl von dem Werkstoff als auch von der Geometrie des genannten Streifens ab. Dadurch, dass sich die Festigkeitseigenschaften im Bereich des Streifens signifikant von denjenigen der angrenzenden Wandung unterscheiden, ist sichergestellt, dass übliche, unvermeidliche Maß- und Homogenitäts- bzw Werkstofftoleranzen die Reproduzierbarkeit des Öffnungsverhaltens nicht beeinträchtigen.

Eine für eine Gassauströmung aus dem Gassack zur Verfügung stehende Öffnung definierter Größe, Lage und Gestalt führt bei gegebenen Druckverhältnissen auch zu einem insbesondere sowohl hinsichtlich des Beginns als auch des zeitlichen Ablaufs reproduzierbaren Druckabbau. Dieser setzt im Verhältnis zu dem vorangegangenen Druckaufbau weder zu früh noch zu spät ein. Toleranzbedingte, dem eingangs dargelegten Stand der Technik anhaftende Zufälligkeiten werden somit vermieden.

Die für eine Gassausströmung zur Verfügung stehende Öffnung des Gassackes ist stets zum Teil durch einen festigkeitsmäßig ungeschwächten Linienzug gekennzeichnet. Dieser bildet somit eine feste Verbindung zwischen einem aus der Flache der Wandung herausklappbaren Abschnitt, der im übrigen ursprünglich über den festigkeitsmäßig geschwächten Linienzug mit der Wandung in Verbindung stand. Eine Rissbildung setzt nicht wie bei dem Stand der Technik an einer mehr oder weniger zufälligen Stelle ein, sondern vielmehr in und entlang eines vergleichsweise schmalen streifenförmigen Bereiches, somit in kontrollierter Weise. Dies bedeutet, dass der herausklappbare Abschnitt, der die Gassausströmöffnung ursprünglich verschlossen hat, auch nach erfolgtem Öffnen nicht unkontrolliert fortgeschleudert wird, sondern vielmehr an der Wandung des Gassackes verbleibt. Verletzungsgefahren infolge einer unkontrollierten Zerlegung einer die Öffnung des Gassackes ursprünglich verschließenden Membran sowie eines Fortschleuderns von Einzelteilen derselben werden auf diesem Wege vermieden.

Im einfachsten Fall kann der durch die genannten Linienzüge umgrenzte, aus der Wandung der Gassackes herausklappbare Abschnitt unmittelbar in die Wandung eingearbeitet werden.

In jedem Fall steht ein Gassack für ein Airbag-Sicherheitssystem zur Verfügung, welcher in reproduzierbarer Weise eine verbesserte Kontrolle des Druckabbaus und der auf den Fahrzeuginsassen ausgeübten Dämpfung mit sich bringt.

Erfindungsgemäß wird der streifenartige festigkeitsmäßige geschwächte Linienzug durch eine streifenartige werkstoffliche, eine Schwächung mit sich bringende Veränderung der Substanz der Wandung gebildet.

Die Auslegung dieser streifenartigen Schwächungszone erfolgt stets auch unter Berücksichtigung der Breite des Streifens sowie dessen Randbedingungen im Übergang zu dem ungeschwächten Bereich, so dass die Tiefe, die Breite und die Gestalt des Streifens zu beachten sind. Eine auf einer gezielten werkstofflichen Veränderung beruhende Bereitstellung des genannten Linienzuges kann beispielsweise dadurch erreicht werden, dass der Linienzug durch eine, mit einer Füllmasse ausgefüllte Ausnehmung einer Wandung gebildet ist, wobei die Füllmasse mit der Substanz der Wandung verbindbar ist und insbesondere hinsichtlich ihrer Festigkeitseigenschaften aufgrund ihrer Zusammensetzung einstellbar ist. In jedem Fall können auf diesem Wege beliebige Streifenmuster in einer Wandung gebildet werden, deren Festigkeitseigenschaften und Öffnungsverhalten in Abhängigkeit von einer Druckbeanspruchung einstellbar sind.

Die Merkmale der Ansprüche 2 und 3 zeigen die beiden grundsätzlichen Alternativen zur Ausbildung des festigkeitsmäßig geschwächen Linienzuges auf. Dieser kann besonders vorteilhaft auch in eine Membran eingearbeitet werden, die eine Ausnehmung des Gassackes überdeckt und somit als vorbereitetes Teil anzusehen ist, das in einer, die Ausnehmung des Gassackes zunächst dichtend verschließenden Weise mit diesem verbunden wird. Diese Verbindung kann beispielsweise eine Verklebung sein.

Die Membran kann entsprechend den Merkmalen der Ansprüche 4 bis 6 werkstoffgleich mit dem Gassack im Übrigen sein oder vorzugsweise aus einem Elastomer bestehen. Ebenfalls vorzugsweise weist die Membran, von dem festigkeitsmäßig geschwächten streifenartigen Linienzug abgesehen, eine im wesentlichen konstante Dicke auf.

Entsprechend den Merkmalen des Anspruchs 7 wird die, für ein Ausströmen von Gasen zur Verfügung stehende Öffnung durch ein Streifenmuster in der Fläche der Membran gebildet, welches einen oder mehrere festigkeitsmäßig geschwächte Linienzüge bildet, die jeweils einander gegenüberliegende Endpunkte aufweisen, deren Verbindungslinien jeweils die festigkeitsmäßig ungeschwächten Linienzüge bilden. In jedem Fall wird die genannte Öffnung durch den, um eine solche Verbindungslinie klappbaren Abschnitt bzw. durch die Gesamtheit der, um die Verbindungslinien klappbaren Abschnitte gebildet.

Die Merkmale der Ansprüche 8 und 9 sind auf unterschiedliche geometrische Formen eines Streifenmusters in der Ebene der Membran gerichtet, welches die, festigkeitsmäßig geschwächten streifenartig angelegten Linienzüge beschreibt, dessen äußere Endpunkte zugleich die Lage und die Erstreckung der genannten Verbindungslinien beschreiben.

Die Merkmale des Anspruchs 10 zielen darauf ab, den Beginn des Einreißvorgangs innerhalb der streifenartigen Struktur an einem vorherbestimmten Punkt beginnen zu lassen, um auch auf diesem Wege den zeitlichen Ablauf des Öffnungsvorgangs, dessen Gleichmäßigkeit und Reproduzierbarkeit weiter zu verbessern.

Die Erfindung wird im Folgenden unter Bezugnahme auf die in den Zeichnungen schematisch wiedergegebenen Ausführungsbeispiele näher erläutert werden. Es zeigen:
Fig. 1 ein erstes Ausführungsbeispiel einer vorbereiteten, zur Verwendung bei einem Gassack bestimmten Membran;
Fig. 2 ein zweites Ausführungsbeispiel einer vorbereiteten Membran;
Fig.3 ein drittes Ausführungsbeispiel einer vorbereiteten Membran;
Fig. 4 ein viertes Ausführungsbeispiel einer vorbereiteten Membran.

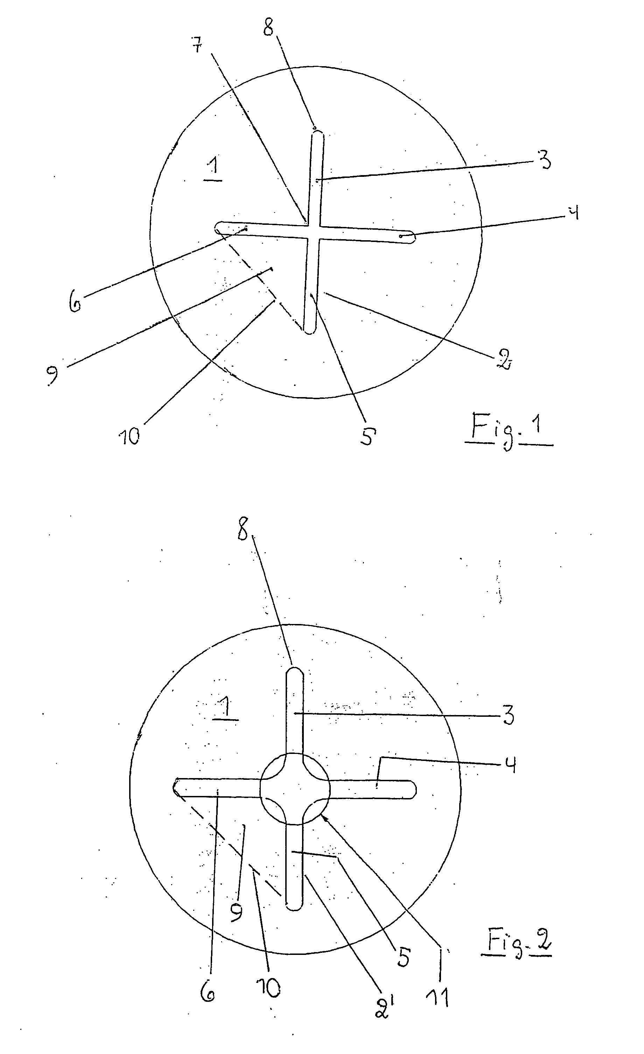

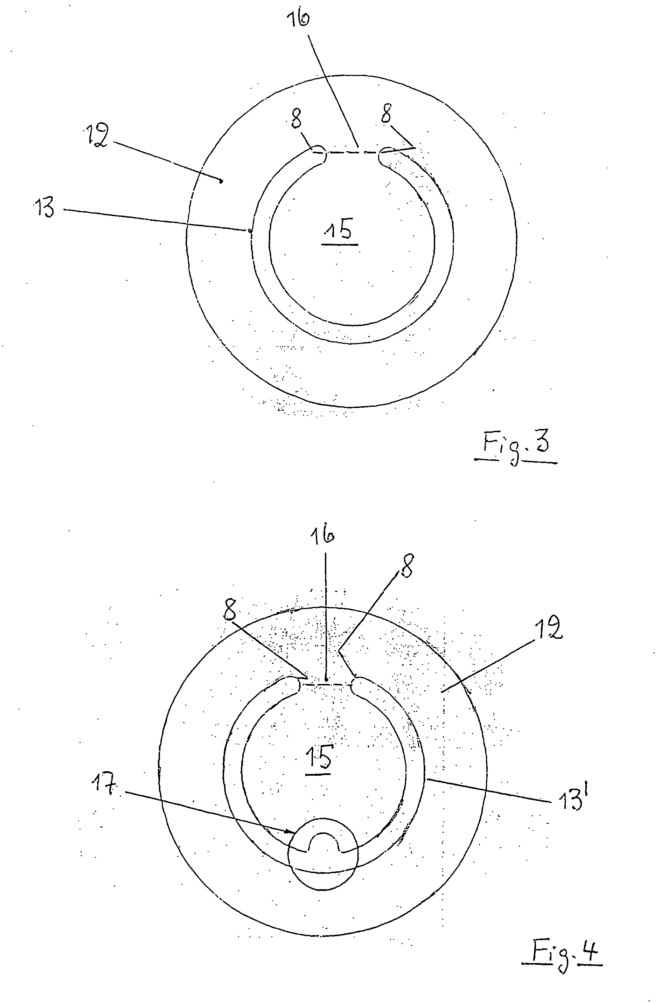

Fig. 1 zeigt in der Draufsicht eine kreisförmige, beispielsweise aus Silikonkautschuk bestehende, zur Überdeckung einer beispielsweise ebenfalls kreisförmigen Öffnung in der nicht dargestellten Wandung eines Gassackes bestimmte Membran 1. Diese ist im Randbereich mit der Wandung verklebt und bildet im unbeschädigten Zustand für die Öffnung einen gasdichten Abschluß.

Mit 2 ist ein in einem mittleren Bereich der Membran angeordnetes, global kreuzförmiges Streifenmuster bezeichnet, welches aus vier, untereinander gleich bemessenen, sich zueinander senkrecht erstreckenden Streifenabschnitten 3, 4, 5 und 6 besteht. Die in der Mitte der Membran 1 einander kreuzenden Streifenabschnitte 3 bis 6 sind durch rechtwinklig zueinander verlaufende Übergangsabschnitte 7 gekennzeichnet und weisen an ihren äußeren Enden jeweils Abrundungen 8 auf.

Die Membran 1 weist im übrigen Festigkeitseigenschaften auf die denjenigen der Wandung des Gassackes entsprechen. Die Festigkeit des Streifenmusters 2 ist nunmehr dahingehend angelegt, dass der während einer Aufblasphase des Gassackes entwickelte Druck bis zu dessen vollständiger Entfaltung beschädigungsfrei aufnehmbar ist.

Erst dann, wenn es zu einer beträchtlichen Druckerhöhung dadurch kommt, dass der Fahrzeuginsasse auf den entfalteten Sack stürzt, wird die Festigkeit des Streifenmusters 2 überschritten, so dass ein Zerreißen eintritt. Wesentlich ist jedoch, dass ein Zerreißen auf den Bereich des Streifenmusters 2 beschränkt ist und dass die Festigkeit der Membran 1 im übrigen so angelegt ist, dass auch der erhöhte, durch das Eindringen des Fahrzeuginsassen entwickelte Druck beschädigungsfrei aufnehmbar ist.

Bei einer im obigen Sinne eintretenden Zerstörung des Streifenmusters 2 bilden sich insgesamt vier, untereinander gleich bemessene Abschnitte 9 der Membran 1, die unter dem Druck der aus dem Gassack ausströmenden Gase um die Verbindungslinien 10 zwischen jeweils zwei der abgerundeten Enden zweier Streifenabschnitte 3 bis 6 geklappt werden. Hieraus folgt ein Öffnungsquerschnitt, der durch vier derartige Verbindungslinien 10 umschrieben ist und der somit in Abweichung von dem eingangs dargelegten Stand der Technik eine definierte Größe und Gestalt aufweist. Letztgenannte Eigenschaft, nämlich eine definierte Ausströmöffnung ist eine wesentliche Vorraussetzung für ein reproduzierbares Öffnungsverhalten der Membran 1. Der Einfluß von Abmessungstoleranzen und gleichermaßen derjenigen Toleranzen, die von werkstofflichen Inhomogenitäten ausgehen, ist somit minimiert.

Der Einreißvorgang bei einem Streifenmuster 2 beginnt bei gegebenem Innendruck des Gassackes an einem Punkt relativ höchster mechanischer Beanspruchung, welches im Eckenbereich zweier aneinander grenzender Streifenabschnitte, nämlich den Eckenabschnitten 7 gegeben ist. Somit ist auch das Problem des zufälligen Beginns des Einreißvorgangs zumindest dahingehend gelöst, dass dieser stets an vorherbestimmten Punkten des Streifenmusters 2 einsetzt.

Wesentlich für die Wirkungsweise eines mit einer solchen Membran ausgerüsteten Gassackes ist ferner, dass trotz erfolgter Zerstörung der Membran 1 ein unkontrolliertes Umherfliegen von Einzelteilen der Membran 1 wirksam unterbunden ist, da der Verbund der Abschnitte 9 entlang der Verbindungslinien 10 erhalten bleibt. Das Problem möglicher Verletzungen durch diese Einzelteile stellt sich somit nicht.

In den Fig. 2 bis 4 sind Funktionselemente, die mit denjenigen der Fig.1 übereinstimmen, entsprechend beziffert, so dass auf eine wiederholte Beschreibung verzichtet werden kann.

Fig. 2 zeigt ein der Fig. 1 ähnliches, global kreuzförmiges, einen geschwächten Bereich bildendes Streifenmuster 2' einer Membran 1, welches lediglich in einem zentralen Bereich 11 eine abweichende Gestaltung erfahren hat. So sind die Eckenbereiche der aneinandergrenzenden Streifenabschnitte 3 bis 6 durch abgerundete Übergangsabschnitte 7' gekennzeichnet, so dass sich im Vergleich zu der Darstellung gemäß Fig.1 in der Mitte der kreuzförmigen Struktur eine in der Fläche größere Schwächungszone ergibt. Auf diese Weise ist sichergestellt, dass der Einreißvorgang stets in diesem mittleren Bereich seinen Ausgang nimmt und sich von hier aus in Richtung auf die Randzonen hin ausbreitet. Im übrigen entspricht diese Ausführungsform in ihrer Beschaffenheit und grundsätzlichen Wirkungsweise derjenigen gemäß Fig. 1.

Fig. 3 zeigt eine Membran 12 mit einem, einen geschwächten Bereich bildenden Streifenmuster 13, welches die Gestalt einer offenen Kurve, hier eines offenen Kreises aufweist. Die Membran 12 ist wiederum kreisförmig ausgebildet und es erstreckt sich die kreisförmige Struktur des Streifenmusters koaxial zu der äußeren Berandung der Membran 12. Das kreisförmige Streifenmuster 13 erstreckt sich in dem gezeigten Ausführungsbeispiel über einen Umfangswinkel von mehr als 300° und es sind die einander gegenüberstehenden Enden des Streifenmusters mit Abrundungen 8 versehen.

Das Streifenmuster 13 umschließt einen Abschnitt 15 der Membran, der dazu bestimmt und eingerichtet ist, im Fall des Öffnens der Membran um die Verbindungslinie 16 der abgerundeten Endpunkte des Streifenmusters geklappt zu werden und auf diesem Wege eine Ausströmöffnung für Gase freizugeben. Die Beschaffenheit sowie die Wirkungsweise des Streifenmusters 13 entspricht im übrigen denjenigen der vorstehend bereits beschriebenen.

Fig. 4 zeigt eine Abwandlung des in Fig. 3 dargestellten Prinzips dahingehend, dass die, wiederum die Gestalt eines offenen Kreises aufweisende Kreisstruktur eines Streifenmusters 13' an einer Stelle 17 eine in der Fläche vergrößerte Schwächungszone aufweist. Auf diese Weise wird erreicht, dass im Fall des Öffnens der Membran 13' der Einreißvorgang an dieser Stelle 17 beginnt und sich von hier aus in Richtung auf die wiederum Abrundungen 8 aufweisenden Enden der Streifenstruktur 13' hin ausbreitet. Die Stelle 17 befindet sich vorzugsweise mittig zwischen den genannten Enden, so dass sich der Einreißvorgang ausgehend von der Stelle 17 symmetrisch in Richtung auf die beiden Enden hin ausbreitet.

Bei den Ausführungsbeispielen entsprechend den Fig. 3 und 4 ergeben sich bei einem Vergleich mit den, dem Stand der Technik zuzuordnenden Ausführungsformen wiederum vergleichbare Vorteile. Es wird stets eine definierte, sich aus der Geometrie des jeweiligen Streifenmusters 13, 13' ergebende Ausströmöffnung für die Gase innerhalb des Gassackes zur Verfügung gestellt. Die zur Überdeckung einer Öffnung des Gassackes sowie zur Verklebung oder sonstigen dichtenden Verbindung mit diesem bestimmte Membran weist ein Öffnungsverhalten auf, welches nach Maßgabe äußerst enger Grenzen reproduzierbar ist.

Bei allen erfindungsgemäßen Ausführungsformen wird durch die Streifenstruktur 2, 2', 13, 13' stets ein Bereich der Membran bestimmt, der im Öffnungsfall unter dem Druck der ausströmenden Gase aus der Ebene der Membran zwecks Freigabe einer Ausströmöffnung zwar herausgeklappt wird, mit der Membran im übrigen jedoch entlang der jeweiligen Verbindungslinien 10, 16 in Verbindung bleibt. Verletzungsgefahren infolge einer unkontrollierten Zerlegung einer Membran sowie entsprechend der Geschwindigkeit des Öffnungsvorgangs mit hoher Geschwindigkeit fortgeschleuderter Membranteile werden somit unterbunden. Stets ist der zwecks Freigabe einer Ausströmöffnung aus der Ebene der Membran herausklappbare Abschnitt 9,15 durch zwei Linienzüge umgrenzt, nämlich einen streifenartigen, festigkeitsmäßig geschwächten und einen festigkeitsmäßig nicht geschwächten, die gemeinsam den genannten Abschnitt umgrenzen. Die sich ergebende Ausströmöffnung ist weitestgehend unabhängig von eventuellen Vorschädigungen der eingangs bezeichneten Art sowie von üblichen werkstofflichen Toleranzen oder auch üblichen Maßtoleranzen.

Eine Membran 1, 12 besteht vorzugsweise aus einem Silikonelastomer, beispielsweise einem Silikonkautschuk mit einer Shore A Härte von 60° bis 70°. wobei das genannte, eine linienhafte Struktur verminderter Festigkeit bildende Streifenmuster 2, 2', 13, 13' derart herstellbar ist, dass in einem ersten Schritt die Membran als separates Werkstück hergestellt wird, und zwar nach Maßgabe einer konstanten Dicke und in einer zum Überdecken einer Ausnehmung des Gassackes entsprechenden Größe. In einem zweiten Schritt wird in diese Membran eine flächenhafte, das zu erstellende Streifenmuster bildende Ausnehmung eingeschnitten, die in einem dritten Schritt mit einer Füllmasse ausgefüllt wird, nämlich einer zu Elastomeren härtbaren Organopolysiloxanmasse. Diese kann in an sich bekannter Weise aus handelsüblichen Komponenten hergestellt werden.

Wesentlich ist, dass die Festigkeitseigenschaften dieser Füllmasse über deren Zusammensetzung, beispielsweise die Mengenanteile des Hauptpolymers und der eingesetzten Füllstoffe in weiten und insbesondere reproduzierbaren Grenzen variierbar sind. Insbesondere ist es auf diesem Wege möglich, jeden bei Airbag-Sicherheitssystemen in Betracht kommenden Öffnungsdruck einzustellen. Die Einstellung erfolgt in Verbindung mit der Bemessung und der Gestaltung der streifenartigen Schwächungszonen, so dass insbesondere auch der Ausgangspunkt eines Einreißvorgangs, wie vorstehend beispielhaft anhand der Fig. 2 und 4 erläutert, über die entsprechende Einstellung der Parameter Werkstoff und Geometrie konstruktiv vorgebbar ist.

## Patentansprüche

1. Für ein Airbag-Sicherheitssystem bestimmter, mit Hinblick auf einen kontrollierten Druckabbau im Anschluss an eine Druckaufbau- und Entfaltungsphase hin ausgestalteter Gassack, mit einer während der Druckaufbauphase dichtend geschlossenen, während der Druckabbauphase hingegen zum kontrollierten Ausströmen von Gasen bestimmten Öffnung, wobei der Öffnungsvorgang nach Maßgabe des Innendruckes des Gassackes auslösbar ist, wobei die während der Druckabbauphase freizugebende Öffnung durch die äußere Berandung wenigstens eines, aus der Fläche der Wandung des Gassackes herausklappbaren Abschnitts (9,15) gebildet ist, dessen Berandung in einem ersten Teil durch einen streifenartigen, zwei einander gegenüberliegende Endpunkte aufweisenden, festigkeitsmäßig geschwächten Linienzug und in einem zweiten Teil durch einen, durch die Verbindungslinie (10, 16) der genannten Endpunkte dieses Linienzuges definierten ungeschwächten Linienzug gebildet ist, wobei dieser Abschnitt (9,15) um die jeweilige Verbindungslinie klappbar ist, und wobei sich der geschwächte und der ungeschwächte Linienzug zu einer geschlossenen Kurve komplettieren, **dadurch gekennzeichnet, dass** der festigkeitsmäßig geschwächte Linienzug durch eine streifenartige, mit einer Füllmasse ausgefüllte Ausnehmung gebildet ist, wobei die Füllmasse mit dem Werkstoff der angrenzenden Wandung verbindbar ist und wobei die Festigkeit der Fülmasse mit Hinblick auf die Bereitstellung eines in definierter Weise festigkeitsmäßig geschwächten Linienzuges ausgewählt ist.

2. Gassack nach Anspruch1, **dadurch gekennzeichnet, dass** der geschwächte Linienzug unmittelbar in die Wandung des Gassackes eingearbeitet ist.

3. Gassack nach Anspruch 1 oder 2, **dadurch gekennzeichnet, dass** der geschwächte Linienzug in eine Membran (1,12) eingearbeitet ist und dass die Membran (1,12) zum dichtenden Verschließen einer Ausnehmung in der Wandung des Gassackes bestimmt und angeordnet ist.

4. Gassack nach Anspruch 3, **dadurch gekennzeichnet, dass** die Membran (1,12) werkstoffgleich mit dem Werkstoff des Gassackes ausgebildet ist.

5. Gassack nach Anspruch 3, **dadurch gekennzeichnet, dass** die Membran aus einem Elastomer, insbesondere einem Silikonelastomer ausgebildet ist.

6. Gassack nach einem der vorangegangenen Ansprüche 3 bis 5, **dadurch gekennzeichnet, dass** die Membran über ihre flächenhafte Erstreckung im Wesentlichen gleichförmige Festigkeitseigenschaften aufweist und dass diese Festigkeitseigenschaften vorzugsweise denjenigen des Werkstoffs der Wandung des Gassacks entsprechen.

7. Gassack nach einem der vorangegangenen Ansprüche 1 bis 6, **dadurch gekennzeichnet, dass** der festigkeitsmäßig geschwächte Linienzug durch ein, ein oder mehrere, aus der Fläche der Wandung des Gassackes herausklappbare Abschnitte (9,15) definierendes Streifenmuster (2, 2',13, 13') gebildet ist, wobei die äußere Berandung eines jeden Abschnitts (9,15) durch einen festigkeitsmäßig geschwächten, zwei einander gegenüberliegende Endpunkte aufweisenden Linienzug einerseits und einem festigkeitsmäßig ungeschwächten, durch die Verbindungslinie (10, 16) zwischen den genannten Endpunkten definierbaren Linienzug andererseits zusammengesetzt ist und wobei die Fläche des Abschnitts (15) bzw. die Summe der Flächen der mehreren Abschnitte (9) die Größe der für ein Ausströmen von Gasen aus dem Gassack zur Verfügung stehenden Öffnung definiert/definieren.

8. Gassack nach Anspruch 7, **dadurch gekennzeichnet, dass** das Streifenmuster (2,2') eine global kreuzförmige Struktur aufweist, wobei sich die genannten Verbindungslinien (9) zwischen den Endpunkten dieser Struktur erstrecken, so dass die Gesamtheit aller Verbindungslinien (9), die für ein Ausströmen von Gasen aus dem Gassack zur Verfügung stehende Öffnung des Gassackes umgrenzt.

9. Gassack nach Anspruch 7, **dadurch gekennzeichnet, dass** das Streifenmuster (13,13') die Gestalt einer offenen, zwei einander gegenüberliegende Endpunkte aufweisenden Kurve hat, so dass die für ein Ausströmen von Gasen aus dem Gassack zur Verfügung stehende Öffnung durch diese Kurve und die Verbindungslinie (16) zwischen deren Endpunkten umgrenzt ist.

10. Gassack nach einem der vorangegangenen Ansprüche 1 bis 9, **dadurch gekennzeichnet, dass** der streifenartige, festigkeitsmäßig geschwächte Linienzug mit zum Auslösen des Einreißvorgangs zu Beginn der Druckabbauphase bestimmten Bereichen (11, 17) versehen ist, die mit der Maßgabe angelegt sind, dass diese punktuell Stellen von gegenüber den übrigen Abschnitten dieses Linienzuges weiter verminderter Festigkeit bilden und somit bei gegebenem Druck innerhalb des Gassackes als Ausgangspunkt des Einreißvorganges wirken.

## Claims

1. Gas sack intended for use in an airbag safety system and designed with regard to a controlled release of pressure following a pressure increase and expansion phase, having an opening designed to close with a sealing effect during the pressure increase phase and to permit the controlled release of gases during the pressure release phase, wherein the opening process is activated according to the internal pressure of the gas sack, wherein the opening produced during the pressure release phase is formed by the outer edge of at least one section (9, 15) which can be folded out from the surface of the wall of the gas sack, wherein the edge of the fold-out section is formed on the one hand by a weakened seam in the form of a strip with two endpoints located opposite one another, and on the other hand by an unweakened seam defined by the line (10, 16) connecting these endpoints, wherein this section (9, 15) folds along the relevant connecting line and wherein the weakened and unweakened seams complete a closed curve, **characterised in that** the weakened seam is in the form of a strip-like recess filled with a filling material, wherein the filling material can be compounded with the material of the adjacent wall and wherein the solidity of the filling material is selected with reference to the provision of a weakened seam as defined above.

2. Gas sack as claimed in claim 1, **characterised in that** the weakened seam is directly incorporated in the wall of the gas sack.

3. Gas sack as claimed in claim 1 or 2, **characterised in that** the weakened seam is incorporated in a membrane (1, 12) and that the membrane (1, 12) is designed and arranged to close and seal a recess in the wall of the gas sack.

4. Gas sack as claimed in claim 3, **characterised in that** the membrane (1, 12) is formed by the same material as the gas sack material.

5. Gas sack as claimed in claim 3, **characterised in that** the membrane is formed by an elastomer (in particular a silicon elastomer).

6. Gas sack as claimed in one of the above claims 3 to 5, **characterised in that** the membrane has substantially the same properties with regard to its strength over the extent of its surface and that such properties preferably correspond to the materials forming the wall of the gas sack.

7. Gas sack as claimed in one of the above claims 1 to 6, **characterised in that** the weakened seam is formed by a defining strip (2, 2', 13, 13') of one or more sections (9, 15) which can be folded out from the surface of the wall of the gas sack, wherein the outer edge of each section (9, 15) consists on the one hand of a weakened seam with two endpoints located opposite one another and on the other hand of an unweakened seam which can be defined by the line (10, 16) connecting these endpoints, wherein the surface of the section (15), or alternatively the sum of the surfaces of the multiple sections (9), defines the size of the available opening permitting the release of gases from the gas sack.

8. Gas sack as claimed in claim 7, **characterised in that** the overall configuration of the strip (2, 2') is in the form of a cross, wherein the above-mentioned connecting lines (9) extend between the endpoints of this configuration so that the connecting lines (9) as a whole define the available opening permitting the release of gases from the gas sack.

9. Gas sack as claimed in claim 7, **characterised in that** the strip (13, 13') has the form of an open curve with two endpoints located opposite one another so that the available opening permitting the release of gases from the gas sack is defined by this curve and the connecting line (16) between its endpoints.

10. Gas sack as claimed in one of the above claims 1 to 9, **characterised in that** the strip-shaped, weakened seam has certain areas (11, 17) for activating the tearing process at the beginning of the pressure release phase which areas are provided on condition that such areas form specific points which are of reduced strength with respect to the remaining sections of this seam and thus act as the start point for the tearing process at a given pressure in the gas sack.

## Revendications

1. Sac gonflable adapté à un système de sécurité à coussin gonflable et conçu en vue d'une réduction contrôlée de la pression après une phase de pressurisation et de déploiement, avec une ouverture fermée hermétiquement pendant la phase d'augmentation de la pression mais destinée à un échappement contrôlé de gaz pendant la phase de réduction de la pression, dont l'opération d'ouverture peut être déclenchée en fonction de la pression intérieure du sac gonflable, l'ouverture à dégager pendant la phase de réduction de la pression étant formée par le bord extérieur d'au moins une zone (9, 15) pouvant se soulever à la manière d'un clapet de la surface de la paroi du sac gonflable, dont le bord est formé, dans une première partie, par une ligne de solidité affaiblie en forme de bande présentant deux points d'extrémité se faisant face, et, dans une seconde partie, par une ligne non affaiblie définie par la ligne (10, 16) reliant lesdits points d'extrémité de cette ligne, cette zone (9, 15) pouvant être rabattue autour de la ligne de liaison, et la ligne affaiblie et la ligne non affaiblie se complétant pour former une courbe fermée, **caractérisé en ce que** la ligne de solidité affaiblie est formée par un évidement en forme de bande rempli par une matière de remplissage, laquelle matière de remplissage peut être liée au matériau de la paroi contiguë et a une solidité choisie de façon à créer une ligne dont la solidité est affaiblie de façon définie.

2. Sac gonflable selon la revendication 1, **caractérisé en ce que** la ligne affaiblie est créée directement dans la paroi du sac gonflable.

3. Sac gonflable selon la revendication 1 ou 2, **caractérisé en ce que** la ligne affaiblie est créée dans une membrane (1, 12) et **en ce que** la membrane (1, 12) est conçue et disposée de manière à assurer la fermeture hermétique d'un évidement dans la paroi du sac gonflable

4. Sac gonflable selon la revendication 3, **caractérisé en ce que** la membrane (1, 12) est faite du même matériau que le sac gonflable.

5. Sac gonflable selon la revendication 3, **caractérisé en ce que** la membrane est faite d'un élastomère, en particulier de silicone élastomère.

6. Sac gonflable selon l'une des revendications 3-5, **caractérisé en ce que** la membrane présente sur toute sont étendue des propriétés de solidité sensiblement uniformes, et **en ce que** ces propriétés de solidité correspondent de préférence à celles du matériau de la paroi du sac gonflable.

7. Sac gonflable selon l'une ou l'ensemble des revendications 1 à 6, **caractérisé en ce que** la ligne de solidité affaiblie est formée par un motif de bandes (2, 2', 13, 13') définissant une ou plusieurs sections (9, 15) pouvant se soulever de la paroi du sac gonflable, le bord extérieur de chaque section (9, 15) étant formé, d'une part, par une ligne de solidité affaiblie présentant deux points d'extrémité se faisant face, et d'autre part par une ligne de solidité non affaiblie pouvant être définie par la ligne (10, 16) reliant lesdits points d'extrémité, la surface de la zone (15) ou la somme des surfaces des multiples zones (9) définissant la taille de l'ouverture disponible pour l'échappement de gaz hors du sac gonflable.

8. Sac gonflable selon la revendication 7, **caractérisé en ce que** le motif de bandes (2, 2') présente une structure globalement en forme de croix, les lignes de liaison (9) s'étendant entre les points d'extrémité de cette structure, de sorte que l'ensemble des lignes de liaison (9) délimite l'ouverture disponible pour l'échappement de gaz hors du sac gonflable.

9. Sac gonflable selon la revendication 7, **caractérisé en ce que** le motif de bandes (13, 13') a la forme d'une courbe ouverte présentant deux points d'extrémité se faisant face, de sorte que l'ouverture disponible pour l'échappement de gaz hors du sac gonflable est délimitée par cette courbe et la ligne (16) reliant ses points d'extrémité.

10. Sac gonflable selon l'une des revendications 1 à 9, **caractérisé en ce que** la ligne de solidité affaiblie en forme de bande est pourvue de zones (11, 17) destinées à amorcer le processus de déchirement au début de la phase de réduction de la pression, qui sont conçues de telle manière qu'elles forment ponctuellement des zones de solidité encore affaiblie par rapport aux autres parties de cette ligne et agissent ainsi, à une pression donnée à l'intérieur du sac gonflable, comme le point de départ du processus de déchirement.
